# EUROPEAN PATENT APPLICATION

(11) **EP 3 381 528 A1**
(43) Date of publication of application: **03.10.2018**
(21) Application number: 17001874.1
(22) Date of filing: 15.11.2017
(51) Int. Cl.: A63H 23/10, A63G 31/00

(54) **WATER-SAVING ELECTRONIC VALVE**

(30) Priority: 27.03.2017 CN 201720305232 U
(71) Applicant: Bestway Inflatables & Material Corp., Shanghai 201812 (CN)
(72) Inventor: HUANG, Shuiyong, Shanghai, 201812 (CN); QIU, Wanbin, Shanghai, 201812 (CN)
(74) Representative: Müller-Boré & Partner Patentanwälte PartG mbB

(57) **Abstract**

Provided herein is a water-saving valve that includes water inlet and outlet passageways, a pressure regulating chamber body and movable valve, a drain assembly and a control assembly. The pressure regulating body and movable valve define one pressure regulating chamber that communicates with the water inlet passageway via water hole on the movable plate. The pressure regulating chamber body includes a drain hole that communicates with the pressure regulating chamber. The movable valve plate is conjured to move between first and second positions.

## Description

### FIELD OF THE INVENTION

Certain embodiments of the present invention relate to the field of water valves. More particularly, for example, certain embodiments of the present invention relate to a water-saving valve and a water-spraying toy.

### BACKGROUND OF THE INVENTION

Many of the existing toys, such as water skiing cloths, entertainment pools, entertainment sprinklers, tumblers, and so on, are equipped with a nozzle or a spray pipe with a plurality of water spraying holes, the toys can be implemented to spray water when the spray pipe receives water from a communicating water source. Nevertheless, the water source is usually far away from the water-spraying toy. Thus, the water cannot be turned off in time during a time gap between entertainment uses, which can result in waste of water resources.

Therefore, what is needed is a water-saving valve.

### SUMMARY OF THE INVENTION

Certain embodiments of the present invention provide a water-saving valve comprising: a water inlet passageway and a water outlet passageway; a pressure regulating chamber body and a movable valve plate, wherein the pressure regulating chamber body and the movable valve plate define one pressure regulating chamber, wherein the pressure regulating chamber communicates with the water inlet passageway via a water hole on the movable valve plate, the pressure regulating chamber body is provided with a drain hole, and the drain hole communicates with the pressure regulating chamber, the movable valve plate is configured to move between a first position and a second position by different pressure inside and outside the pressure-regulating chamber acting on the movable valve plate to block or open respectively the water outlet passageway; a drain assembly configured to block or open the drain hole; and a control assembly electrically connected with the drain assembly to control the drain assembly to block or open the drain hole.

In some embodiments, the water-saving valve further comprises an outer case configured to accommodate the water inlet passageway, the water outlet passageway, the pressure regulating chamber body, the movable valve plate, the drain assembly, and the control assembly, wherein both the water inlet of the water inlet passageway and the water outlet of the water outlet passageway extend outside the outer case.

In some embodiments, the water-saving valve further comprises an inner case and an inner case cover, both disposed within the outer case, wherein the drain assembly and the control assembly are disposed within the inner case, and the inner case cover is provided with a first elastic part and a second elastic part.

In some embodiments, the first elastic part and the second elastic part are configured to be deformed when an external force acts, and reset when releasing the external force.

In some embodiments, the water outlet of the water inlet passageway surrounds the water inlet of the water outlet passageway.

In some embodiments, the movable valve plate is configured to move axially between the first position and the second position to block or open the water inlet of the water outlet passageway.

In some embodiments, the hole diameter of the drain hole is larger than that of the water hole.

In some embodiments, the drain hole communicates with the water outlet passageway.

In some embodiments, the drain hole comprises a first sub drain hole and a second sub drain hole; the pressure regulating chamber comprises a first sub pressure regulating chamber and a second sub pressure regulating chamber; the first sub drain hole communicates with the first sub pressure regulating chamber and the second sub pressure regulating chamber, and the second sub drain hole communicates with the second sub pressure regulating chamber and the water outlet passageway.

In some embodiments, the movable valve plate comprises a flexible sealing part and a hard valve plate, and the water hole is disposed on the hard valve plate.

In some embodiments, a first reset spring is disposed within the pressure regulating chamber, wherein the first end of the first reset spring abuts on the pressure regulating chamber body, and the second end of the first reset spring abuts the movable valve plate; and the extension portion of the second end of the first reset spring passes is inserted through the water hole.

In some embodiments, the first reset spring is disposed within the first sub pressure regulating chamber of the pressure regulating chamber.

In some embodiments, the drain assembly comprises a solenoid valve provided with a movable metal core assembly, and the movable metal core assembly comprises a movable metal core and a sealing part connected with one end of the movable metal core.

In some embodiments, the solenoid valve is configured to move the movable metal core assembly in a direction away from the drain hole under the action of a forward magnetic field generated by an electromagnetic coil of the solenoid valve when a forward current passes through the electromagnetic coil of the solenoid valve so as to open the drain hole; and configured to move the movable metal core assembly in a direction close to the drain hole under the action of a reverse magnetic field, generated by the electromagnetic coil of the solenoid valve when a reverse current passes through the coil of the solenoid valve so as to block the drain hole.

In some embodiments, the movable iron core assembly is disposed within the second sub pressure regulating chamber of the pressure regulating chamber and configured to block the second sub drain hole of the drain hole, and the second sub drain hole communicates with the second sub pressure regulating chamber and the water outlet passageway.

In some embodiments, the control assembly comprises a control circuit configured to convey the reverse current or the forward current to the solenoid valve to control the movable iron core assembly to block or open the drain hole.

In some embodiments, the control circuit is configured to stop conveying the forward current to the coil of the solenoid valve after the movable metal core assembly moves from a position of blocking the drain hole to a position of opening the drain hole; and configured to stop conveying the reverse current to the coil of the solenoid valve after the movable metal core assembly moves from a position of opening the drain hole to a position of blocking the drain hole.

In some embodiments, the drain assembly further comprises a magnet close to one end of the movable metal core assembly away from the drain hole, and the magnet is configured to retain the movable metal core assembly at the position of opening the drain hole after the control circuit stops conveying the forward current to the coil of the solenoid valve.

In some embodiments, the drain assembly further comprises a second reset spring, disposed within the second sub pressure regulating chamber of the pressure regulating chamber and connected to the movable metal core assembly, the second reset spring being configured to retain the movable metal core assembly at the position of blocking the drain hole after the control circuit stops conveying the reverse current to the core of the solenoid valve.

In some embodiments, the control assembly further comprises a start signal input device electrically connected with the control circuit and configured to transmit a start signal to the control circuit; and the control circuit is configured to convey the forward current to the coil of the solenoid valve when receiving the start signal from the start signal input device.

In some embodiments, the control assembly further comprises a start button configured to move under the action of the external force to trigger the start signal input device to generate the start signal.

In some embodiments, a first elastic part is disposed between the start button and the start signal input device, wherein the start button is configured to move to deform the first elastic part, so as to trigger the start signal input device to generate the start signal.

In some embodiments, the start button is disposed in the opening of the upper surface of the outer case.

In some embodiments, the control circuit is configured to convey the reverse current to the coil of the solenoid valve to cause the movable metal core assembly to block the drain hole after a preset time since starting to convey the forward current to the coil of the solenoid valve.

In some embodiments, the preset time is a fixed value.

In some embodiments, the preset time value can be adjusted.

In some embodiments, the control assembly further comprises a timing signal input device electrically connected with the control circuit and configured to transmit different timing signals to the control circuit, and different timing signals corresponding to different preset times.

In some embodiments, the control assembly further comprises a slider and a timing control button, wherein one end of the timing control button is connected with the slider, and the other end passes through the outer case, and the timing control button is used to actuate the slider to move to different positions, so that the timing signal input device generates different timing signals.

In some embodiments, a second elastic part is disposed between the slider and the timing signal input device, wherein the slider is configured to move to deform the second elastic part, so as to trigger the timing signal input device to generate the timing signal.

In another aspect, a water-spraying toy is provided herein and comprises the water-saving valve described herein, the water inlet passageway of the water-saving valve communicates with the water source and the water outlet passageway of the water-saving valve is connected with the water-spraying toy.

In another aspect, certain embodiments of the present invention also provide a method for controlling the water-saving valve, wherein the water-saving valve comprises a drain assembly for blocking or opening the drain hole, and the method comprises transmitting a start signal to the control circuit; controlling the drain assembly to open the drain hole when the control circuit receives the start signal; and after a preset time, the control circuit controlling the drain assembly to block the drain hole.

In some embodiments, wherein the drain assembly comprises a solenoid valve provided with a movable metal core assembly, and the movable metal core assembly comprises a movable metal core and a sealing part connected with one end of the movable metal core; controlling the drain assembly to open the drain hole comprises: transmitting forward current to the coil of the solenoid valve, and then the coil generating a forward magnetic field, the movable metal core assembly moves in a direction away from the drain hole under the action of the forward magnetic field generated by an electromagnetic coil of the solenoid valve when a forward current passes through the electromagnetic coil of the solenoid valve to open the drain hole; and controlling the drain assembly to block the drain hole comprises: transmitting reverse current to the coil of the solenoid valve, and then the coil generating a reverse magnetic field, the movable metal core assembly moves in a direction close to the drain hole under the action of the reverse magnetic field generated by the electromagnetic soil of the solenoid valve when a reverse current passes through the electromagnetic coil of the solenoid valve to block the drain hole.

In some embodiments, transmitting the start signal to the control circuit comprises: the start signal input device transmitting the start signal to the control circuit.

In some embodiments, transmitting the start signal to the control circuit by the start signal input device comprises: the start signal input device transmitting the start signal to the control circuit when the start button triggers the start signal input device.

In some embodiments, the control method further comprises receiving a timing signal by the control circuit; and determining the preset time according to the timing signal.

In some embodiments, the control method further comprises a timing signal input device transmitting the timing signal.

In some embodiments, the timing signal input device transmitting the timing signal comprises: the timing signal input device transmitting the timing signal to the control circuit when the timing control button actuates the slider to trigger the timing signal input device.

In some embodiments, wherein the control method further comprises: adjusting the timing signal, so as to change the preset time.

In some embodiments, adjusting the timing signal comprises: the timing signal input device transmits different timing signals to the control circuit when the timing control button actuates the slider to move to different positions, and the different timing signals correspond to different preset times.

The technical solution of certain embodiments of the present invention provide for the following: the water-saving valve is in the closed state by default when the water inlet passageway of the water-saving valve provided herein communicates with the water source, that is, the movable valve plate blocking the water outlet passageway. At this moment, if the start button is pressed by the user to trigger the control circuit to open the drain hole, the pressure inside the pressure regulating chamber is decreased to less than the pressure outside the pressure regulating chamber, wherein the movable valve plate moves to the position of opening the water outlet passageway, then the water-saving valve is switched from the closed state to the open state. After a preset time, the control circuit automatically controls the drain assembly to block the drain hole. As a result, the drain hole is blocked, and the water from the water source gradually flows into the pressure regulating chamber through the water hole, then the pressure inside the pressure regulating chamber is increased to greater than the pressure outside the pressure regulating chamber, the movable valve plate moves gradually toward the water outlet passageway, and after a certain period of time, the movable valve plate moves to a position of blocking the water outlet passageway. That is, the water-saving valve can be automatically switched from the open state to the closed state. Therefore, the water-saving valve provided herein can be implemented to be automatically shut down.

Further, the drain hole comprises a first sub drain hole and a second sub drain hole, the pressure regulating chamber comprises a first sub pressure regulating chamber and a second sub pressure regulating chamber, the first sub drain hole communicates with the first sub pressure regulating chamber and the second sub pressure regulating chamber, and the second sub drain hole communicates with the second sub pressure regulating chamber and the water outlet passageway. Thus, the movable metal core assembly is disposed within the second sub pressure regulating chamber to block the second sub drain hole. Thus, the sealing part of the movable metal core assembly is arranged towards the water outlet passageway to reduce the force required to block the drain hole, which can improve the reliability of blocking the drain hole by the movable metal core assembly.

Further, the control circuit of the control assembly stops conveying forward current to the coil of the solenoid valve after the drain assembly moves from a position of blocking the drain hole to a position of opening the drain hole, and the control circuit of the control assembly stops conveying reverse current to the coil of the solenoid valve to save electricity after the drain assembly moves from a position of opening the drain hole to a position of blocking the drain hole.

Further, the water-saving valve can be applied to the water-spraying toy, so as to realize the function of automatically stop spraying water to save water resource.

### BRIEF DESCRIPTION OF THE DRAWINGS

FIG. 1 illustrates a perspective view of a water-saving valve provided by an embodiment disclosed herein.
FIG. 2 illustrates an exploded view of the water-saving valve shown in FIG. 1.
FIG. 3 illustrates an exploded view of a valve core of a water-saving valve provided by an embodiment disclosed herein.
FIG. 4 illustrates a top view of a valve core of a water saving-valve provided by an embodiment disclosed herein.
FIG. 5 illustrates a cross-sectional view along the A-A section of a valve core shown in FIG. 4.
FIG. 6 illustrates another cross-sectional view along the A-A section of a valve core shown in FIG. 4.
FIG. 7 illustrates an exploded view diagram of the control assembly of a water-saving valve provided by an embodiment disclosed herein.
FIG. 8 illustrates a flow chart of the control method of a water-saving valve provided by an embodiment disclosed herein.

### DETAILED DESCRIPTION OF THE INVENTION

As described in the background, in order to realize the function of spraying water, the existing water-spraying toys are equipped with a nozzle or a water spraying pipe, both communicating with water sources. Nevertheless, since the water source is usually far away from the water-spraying toy, the water cannot be closed in time during a time gap between entertainment uses, and the water resource is wasted.

In view of this, a water-saving valve is provided herein, and suitable for the water-spraying toys. The water-saving valve comprises a water inlet passageway and a water outlet passageway; a pressure regulating chamber body and a movable valve plate, wherein the pressure regulating chamber body and the movable valve plate define one pressure regulating chamber, wherein the pressure regulating chamber communicates with the water inlet passageway via a water hole on the movable valve plate, the pressure regulating chamber body is provided with a drain hole, and the drain hole communicates with the pressure regulating chamber, the movable valve plate is adapted to move between a first position and a second position by different pressure inside and outside the pressure-regulating chamber acting on the movable valve plate to block or open respectively the water outlet passageway; a drain assembly adapted to block or open the drain hole; and a control assembly electrically connected with the drain assembly to control the drain assembly to block or open the drain hole. Therefore, the water in the pressure regulating chamber flows out of the drain hole when the drain assembly opens the drain hole, then the pressure inside the pressure regulating chamber is decreased to less than the pressure outside the pressure regulating chamber, and the movable valve plate moves gradually from a position of blocking the water outlet passageway to a position of opening the water outlet passageway, and the water-saving valve is switched from the closed state to the open state. The water from the water source flows into and fully fills the pressure regulating chamber through the water hole when the drain assembly blocks the drain hole. At this moment, the pressure inside the pressure regulating chamber is increased to greater than the pressure outside the pressure regulating chamber, and the movable valve plate moves gradually from the position of opening the water outlet passageway to the position of blocking the water outlet passageway, that is, the water-saving valve can be automatically switched from the open state to the closed state after a certain period of time. Therefore, the water-saving valve provided herein can be closed automatically after being opened for a certain period of time. The water-spraying toy provided herein can automatically stop spraying water after a certain period of time.

In order to achieve the above purposes, characteristics and advantages of the certain embodiments of the present invention being more clearly understood, the following is a detailed description of the specific embodiments disclosed herein combining with the drawings.

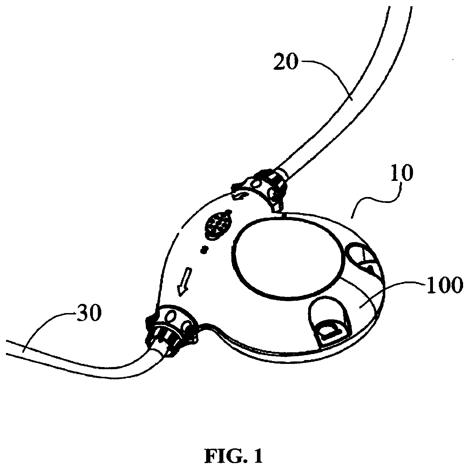

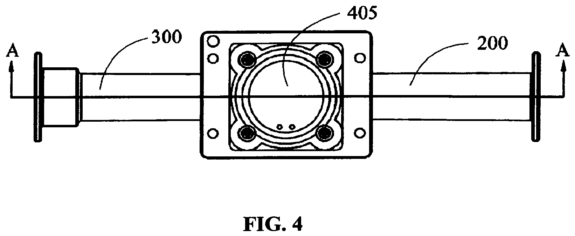

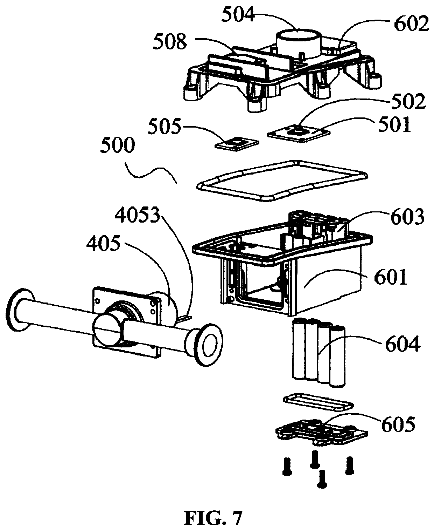

Referring to FIGS. 1 through 7, provided herein is a water-saving valve 10.

As shown in FIG. 1, the water inlet of the water-saving valve 10 is adapted to communicate the water source via the water inlet pipe 20, and the water outlet of the water-saving valve is adapted to be communicated with the water-spraying toy through the water outlet pipe 30. Thus, the water-spraying toy is in communication with the water source when the water-saving valve 10 is in the open state, the water can flow through the water inlet pipe 20, the water-saving valve 10 and the water outlet pipe 30 in turn from the water source and enter into the water-spraying toy, and the toy can realize spraying water; the communication between the water-spraying toy and the water source is cut off by the water-saving valve when the water-saving valve 10 is in the closed state, then the water cannot flow into the water-spraying toy, and the toy stops spraying water from the water source. Therefore, the water-saving valve 10 can be used to control the water-spraying toy to start or stop spraying water.

It is worth noting that the embodiments disclosed herein only take the water outlet pipe 30 communicating the water-spraying toy as an example, but the invention is not limited to this. The water-saving valve 10 can also be communicated with other devices in need of supplying water through the water outlet pipe 30.

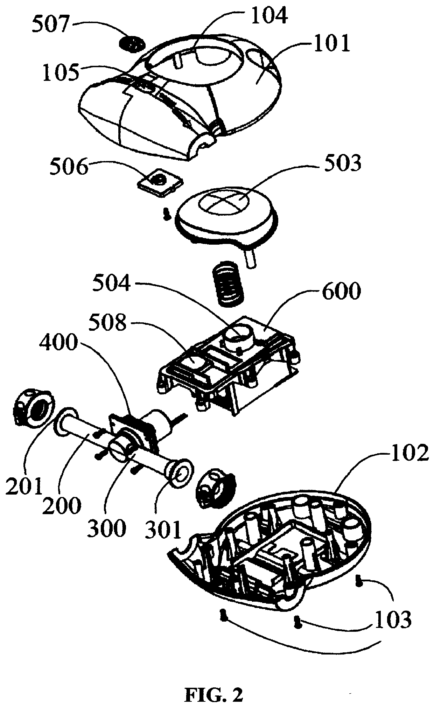

The water-saving valve 10 comprises an outer case 100, which is used for accommodating the various parts of the water-saving valve to form an integral structure. As shown in FIG. 2, in some embodiments, the outer case 100 can be configured to comprise an upper case 101 and a lower case 102, and the upper case 101 and the lower case 102 are locked together by the connectors 103 to form the outer case 100.

The water-saving valve 10 further comprises a water inlet passageway 200 and a water outlet passageway 300. The water inlet 201 of the water inlet passageway 200 and the water outlet 301 of the water outlet passageway 300 are located outside the outer case 100 when the water inlet passageway 200 and the water outlet passageway 300 are assembled within the outer case 100. Specifically, the water inlet 201 of the water inlet passageway 200 passes through one opening formed in the outer case 100 and extends outside the outer case 100, which is adapted to be externally connected with the water inlet pipe 20, and then communicated with the water source. The water outlet 301 of the water outlet passageway 300 passes through another opening formed in the outer case 100 and extends outside the outer case 100, which is adapted to be externally connected with the water outlet pipe 30, and then communicated with the water-spraying toy.

The water-saving valve 10 further comprises a valve core 400, and the valve core 400 is disposed between the water inlet passageway 200 and the water outlet passageway 300, and can be assembled within the outer case 100 together with the water inlet passageway 200 and the water outlet passageway 300. The valve core 400 is used for communicating the water inlet passageway 200 and the water outlet passageway 300, alternatively, blocking the communication between the water inlet passageway 200 and the water outlet passageway 300.

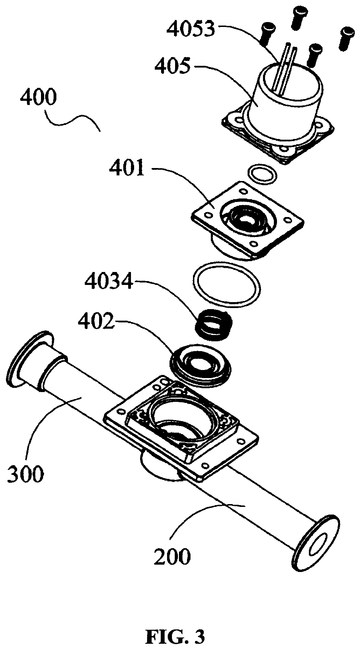

As shown in FIGS. 3 through 6, the valve core 400 comprises a pressure regulating chamber body 401 and a movable valve plate 402. The pressure regulating chamber body 401 is connected with the movable valve plate 402 to define one pressure regulating chamber 403. The pressure regulating chamber 403 communicates with the water inlet passageway 200 through the water hole 4031 formed in the movable valve plate 402.

In some embodiments, the movable valve plate 402 comprises a flexible sealing member 4021 and a hard valve plate 4022.

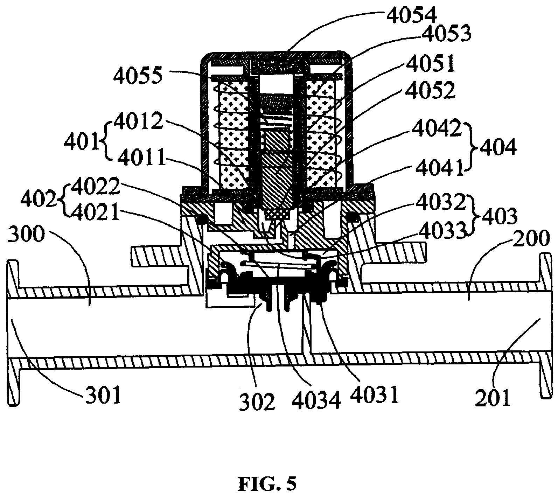

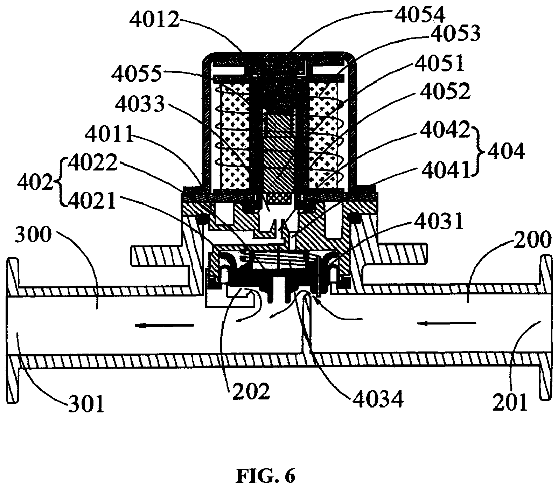

Specifically, the flexible sealing member 4021 can be provided into a ring, and the inner edge of the flexible sealing member 4021 is connected with the hard valve plate 4022, and the outer edge is connected with the pressure regulating chamber body 401. Thus, the flexible sealing member 4021 can generate elastic deformation under the action of external force, so that the movable valve plate 402 is adapted to move between a first position (for example, the position of the movable valve plate 402 shown in FIG. 5) and a second position (the position of the movable valve plate 402 shown in FIG. 6), thereby blocking or opening respectively the water outlet passageway 300.

In some embodiments, the flexible sealing member 4021 can also be arranged in a circular shape. The hard valve plate can be attached to the surface of the flexible sealing member, and the outer edge of the flexible sealing member is coupled to the pressure regulating chamber body. The flexible sealing member 4021 is preferably made of rubber or silicone material.

In some embodiments, the water outlet 202 of the water inlet passageway 200 can be arranged to surround the water inlet 302 of the water outlet passageway 300.

In some embodiments, the movable valve plate 402 is disposed at the water inlet 302 of the water outlet passageway 300. Thus, the water inlet 302 of the water outlet passageway 300 can be blocked or opened when the movable valve plate 402 moves along the axial direction between the first position and the second position.

In some embodiments, the water hole 4031 is disposed on the position that the hard valve plate 4022 close to the water inlet passageway 200, and the water hole 4031 communicates with the water inlet passageway 200. Thus, the pressure regulating chamber 403 communicates with the water inlet passageway 200 via the water hole 4031.

When the water inlet passageway 200 of the water-saving valve 10 communicates with the water source via the water inlet pipe 20 (shown in FIG. 1), water can flow through the water inlet pipe 20 and the water inlet passageway 200 in turn from the water source, and enter into the pressure regulating chamber 403 through the water hole 4031. The pressure in the pressure regulating chamber 403 is gradually increased with the water gradually flowing into the pressure regulating chamber 403 from the water source, when the pressure in the pressure regulating chamber 403 is greater than the pressure outside the pressure regulating chamber 403, the movable valve plate 402 can gradually move towards the position that the water inlet 302 close to the water outlet passageway 300 by different pressure inside and outside the pressure regulating chamber 403 acting on the movable valve plate 402, until the movable valve plate 402 blocks the water inlet 302 of the water outlet passageway 300. That is, the water-saving valve 10 can be changed from the open state shown in FIG. 6 to the closed state shown in FIG. 5.

Further, in order to change the pressure difference between the inner and the outer of the pressure regulating chamber 403, so that the movable valve plate 402 moves to a position that can open the water inlet 302 of the water outlet passageway 300, that is, in order to change the water-saving valve 10 from the closed state shown in FIG. 5 to the open state shown in FIG. 6, the pressure regulating chamber body 401 is provided with the drain hole 404 which communicates with the pressure regulating chamber 403, thereby the water in the pressure regulating chamber 403 can flow out of the drain hole 404 when opening the drain hole 404, and then the pressure in the pressure regulating chamber 403 is decreased, when the internal pressure in the pressure regulating chamber 403 is less than the external pressure, the movable valve plate 402 moves in a direction away from the water inlet 302 of the water outlet passageway 300 to a position that can open the water inlet 302 of the water outlet passageway 300, that is, the water-saving valve 10 can be changed from the closed state shown in FIG. 5 to the open state shown in FIG. 6. At this time, if the drain hole 404 is blocked again, the water can also pass through the water hole 4031 and gradually flow into the pressure regulating chamber 403 from the water source, so that the water-saving valve can be gradually switched from the open state to the closed state.

As a result, using the water-saving valve 10 provided by the embodiment disclosed herein, the pressure in the pressure regulating chamber 403 can be decreased to that of less than the external pressure when the drain hole 404 is in the open state, and the movable valve plate 402 can move from a position of blocking the water outlet passageway 300 to a position of opening the water outlet passageway 300; nevertheless, the pressure in the pressure regulating chamber 403 can be gradually increased to that of greater than the external pressure when the drain hole 404 is in the closed state, and the movable valve plate 402 can gradually move close to the water outlet passageway 300 by different pressure inside and outside the pressure regulating chamber 403 acting on the movable valve plate 402, to block the water outlet passageway 300. Therefore, the water-saving valve provided herein can gradually and automatically be changed from the open state to the closed state, that is, it can be implemented to be automatically shut down.

Besides, the time required for changing the water-saving valve from the open state to the closed state is related to the hole diameter of the water hole 4031 as well as the volume of the pressure regulating chamber 403. Therefore, the time can be adjusted by changing the hole diameter of the water hole 4031 and/or the volume of the pressure regulating chamber 403, that is, it can be implemented to adjust the time for opening the water-saving valve. In practice, both the hole diameter of the water hole 4031 and the volume of the pressure regulating chamber 403 can be set in accordance with the specific requirements.

It is noteworthy that the hole diameter of the water hole 4031 is usually set to be smaller than that of the drain hole 404, thereby the water yield out of the drain hole 404 is more than that of from the water hole 4031 into the pressure regulating chamber 403 when opening the drain hole 404, and the pressure in the pressure regulating chamber 403 is decreased, so that the movable valve plate 402 moves in a direction away from the water outlet passageway 300.

In addition, when the hole diameter of the water hole 4031 is small and the hard valve plate 4022 with the water hole 4031 is an injection molded part, in order to facilitate the manufacture, forming the hard valve plate 4022 with the water hole 4031 in the injection molding, can form a water hole with large hole diameter, then, the metal wire is inserted in the water hole, so as to reduce the effective hole diameter of the water hole and to achieve the effect identical to that of the water hole with the small hole diameter.

Specifically, in some embodiments, a first reset spring 4034 is disposed within the pressure regulating chamber 403. The first end of the first reset spring 4034 abuts the pressure regulating chamber body 401, and the second end abuts the movable valve plate 402. The extension portion of the second end of the first reset spring 4034 is inserted through the water hole 4031 to reduce the effective hole diameter of the water hole 4031.

Therefore, in practice, it is possible to replace the first reset spring with different sizes (for example, formation of a section diameter of metal wire of the reset spring 4034) to change the effective hole diameter of the water hole 4031, so as to change the time of duration required to automatically change the water-saving valve from the open state to the closed state.

Further referring to FIGS. 2 through 6; the valve core 400 also comprises a drain assembly 405 for blocking or opening the drain hole 404. In some embodiments, the drain assembly 405 comprises a solenoid valve provided with a movable metal core assembly. The movable metal core assembly comprises a movable metal core 4051 and a sealing part 4052 connected with one end of the movable metal core 4051. In certain embodiments, the movable metal core 4051 comprises materials such as iron, ferromagnetic materials or a combination thereof. The coil 4053 of the solenoid valve generates a magnetic field when the electric current passes through the coil 4053 of the solenoid valve, and the movable metal core 4051 can move under the action of the magnetic field, so as to drive the sealing part 4052 connected with one end of the movable metal core 4051 to move. In addition, changing the direction that the electric current flows through the coil 4053 can change the movement direction of the movable metal core assembly, and then move the movable metal core 4051 in a direction away from the drain hole 404 or in a direction close to the drain hole 404, so that the sealing part 4052 connected with one end of the movable metal core 4051 can open respectively or block the drain hole 404.

In some embodiments, the drain hole 404 comprises a first sub drain hole 4041 and a second sub drain hole 4042. The pressure regulating chamber body 401 comprises a first sub pressure regulating chamber body 4011 and a second sub pressure regulating chamber body 4012. The pressure regulating chamber 403 comprises a first sub pressure regulating chamber 4032 and a second sub pressure regulating chamber 4033. Wherein, the first sub pressure regulating chamber body 4011 together with the movable valve plate 402 define the first sub pressure regulating chamber 4032, the second sub pressure regulating chamber body 4012 together with the first sub pressure regulating chamber body 4011 define the second sub pressure regulating chamber 4033. Both the movable metal core 4051 of the solenoid valve and the sealing part connected with one end of the movable metal core 4051 are disposed within the second sub pressure regulating chamber 4033. In addition, the first sub drain hole 4041 is used for communicating the first sub pressure regulating chamber 4032 with the second sub pressure regulating chamber 4033. The second sub drain hole 4042 is used for communicating the second sub pressure regulating chamber 4033 with the water outlet passageway 300. Therefore, the pressure regulating chamber 403 communicates with the water outlet passageway 300, and both the movable metal core 4051 and the sealing part 4052 connected with one end of the movable metal core 4051 are disposed within the pressure regulating chamber 403. Thus, the sealing part 4052 is facing towards the water outlet passageway 300 when the sealing part 4052 blocks the second sub drain hole 4042 of the drain hole 404, since the water pressure in the water outlet passageway 300 is small, and the force needed to block the drain hole 404 by the sealing part 4052 is also small, it is possible to improve the reliability of the sealing part 4052 blocking the drain hole 404.

It is noteworthy that the drain hole 404 can also only comprise the first sub drain hole 4041 in the embodiments disclosed herein. At this time, the pressure regulating chamber body 401 only comprises the first sub pressure regulating chamber body 4011, and the pressure regulating chamber 403 only comprises the first sub pressure regulating chamber 4032. The sealing part 4052 is used for blocking the first sub drain hole 4041. In this condition, the sealing part 4052 is facing toward the first sub pressure regulating chamber 4032 when the sealing part 4052 blocks the first sub drain hole 4041, since the first sub pressure regulating chamber 4032 communicates with the water inlet passageway 200, the water from the water source will continuously flow into the first sub pressure regulating chamber 4032, and the water pressure from the water source is large, thus, the sealing part 4052 requires greater force to block the first sub drain hole 4041 as compared to that blocking of the second sub drain hole 4042.

In some embodiments, the solenoid valve is configured to move the movable metal core 4051 in a direction away from the drain hole 404 under the action of the forward magnetic field generated by an electromagnetic coil 4053 of the solenoid valve when a forward current passes through the electromagnetic coil 4053 of the solenoid valve, such that the sealing part 4052 connected with one end of the movable metal core 4051 opens the drain hole 404; and configured to move the movable metal core 4051 in a direction close to the drain hole 404 under the action of a reverse magnetic field generated by the electromagnetic coil 4053 of the solenoid valve when a reverse current passes through the coil 4053 of the solenoid valve, such that the sealing part 4052 connected with one end of the movable metal core 4051 blocks the drain hole 404

It is noteworthy that the forward and reverse currents described herein are relative concepts for representing two opposite currents. When passing through the coil 4053 of the solenoid valve, the current resulted from which can move the movable metal core 4051 in a direction away from the drain hole 404 is defined as the forward current; when passing through the coil 4053 of the solenoid valve, the current resulted from which can move the movable metal core 4051 in a direction close to the drain hole 404 is defined as the reverse current.

Referring to FIGS. 2 through 7, the water-saving valve 10 also comprises a control assembly 500 that is electrically connected to the drain assembly 405 to control the drain assembly 405 from blocking or opening the drain hole 404. Specifically, in some embodiments, the control assembly 500 comprises a control circuit 501. The control circuit 501 is electrically connected to convey the forward current or the reverse current to the solenoid valve, so as to control the movable metal core assembly of the solenoid valve to move to a position that can block or open respectively the drain hole 404.

In some embodiments, the control circuit 501 is configured to stop conveying the forward current when the movable metal core 4051 and the sealing part 4052 move from a position of blocking the drain hole 404 (the position shown in FIG. 5) to a position of opening the drain hole 404 (the position shown in FIG. 6); and configured to stop conveying the reverse current to save electricity when the movable metal core 4051 and the sealing part 4052 move from a position of opening the drain hole 404 to a position of blocking the drain hole 404.

In some embodiments, the drain assembly 405 also comprises a magnet 4054 which is close to one end of the movable metal core 4051 away from the drain hole 404. Thus, when the movable metal core 4051 and the sealing part 4052 move from a position of blocking the drain hole 404 to a position of opening the drain hole 404, the movable metal core 4051 is close to the magnet 4054, at this time, even the control circuit 501 stops conveying the forward current to the coil 4053 of the solenoid valve, the movable metal core 4051 and the sealing part 4052 can remain at the position of opening the drain hole 404.

In some embodiments, the drain assembly 405 also comprises a second reset spring 4055 disposed within the second sub pressure regulating chamber 4033. One end of the second reset spring 4055 is connected with the end of the second sub pressure regulating chamber body 4012, and the other end is connected with the movable metal core 4051. When the movable metal core 4051 and the sealing part 4052 move from a position of opening the drain hole 404 to a position of blocking the drain hole 404, the sealing part 4052 abuts the drain hole 404 under the action of the second reset spring 4055, that is, if the movable metal core 4051 and the sealing part 4052 move in a direction away from the drain hole 404, it is required to overcome the resistance of the second reset spring 4055, therefore, even the control circuit 501 stops conveying the reverse current to the coil 4053 of the solenoid valve, the sealing part 4052 can remain at the position of blocking the drain hole 404 under the action of the second reset spring 4055. In addition, at this time, since the movable metal core 4051 is far away from the magnet 4054, the magnetic force of the magnet 4054 on the movable metal core 4051 is not sufficient to overcome the resistance of the second reset spring 4055 to move the movable metal core 4051 and the sealing part 4052 to the position of opening the drain hole 404.

It is noteworthy that the control circuit 501 can also be configured to continue to convey the forward current when the movable metal core 4051 and the sealing part 4052 move from a position of blocking the drain hole 404 to a position of opening the drain hole 404.

In some embodiments, the control assembly 500 also comprises a start signal input device 502 electrically connected to the control circuit 501 for transmitting a start signal to the control circuit 501. The control circuit 501 is also configured to convey the forward current to the coil of the solenoid valve when receiving the start signal from the start signal input device.

In some embodiments, the control assembly 500 also comprises a start button 503 which is adapted to be moved by an external force to trigger the start signal input device 502 to generate the start signal.

In some embodiments, a first elastic part 504 is disposed between the start button 503 and the start signal input device 502. The first elastic part 504 is deformed when the external force acts, and reset when the external force disappears. The start button 503 is adapted to move to deform the first elastic part 504, so as to trigger the start signal input device 502 to generate the start signal.

In some embodiments, the start button 503 is disposed in the opening 104 of the upper surface of the outer case 100. The start button 503 is exposed on the outer case 100 when the start button 503 is arranged on the outer case 100. Thus, the start button 503 can be pressed by the user to move such that the first elastic part 504 is deformed, so as to trigger the start signal input device 502 to generate the start signal. The control circuit 501 conveys the forward current after receiving the start signal, so that the sealing part 4052 moves to the position of opening the drain hole 404.

In some embodiments, the control circuit 501 is configured to convey the reverse current to the coil 4053 of the solenoid valve to move the movable metal core 4051 and the sealing part 4052 to the position of blocking the drain hole 404 after conveying the forward current to the coil 4053 of the solenoid valve for a preset time. That is, when the control circuit 501 controlling the solenoid valve to open the drain hole 404 by the movable metal core 4051 and the sealing part 4052, after the preset time, the control circuit 501 automatically controls the solenoid valve to block the drain hole 404 by the movable metal core 4051 and the sealing part 4052.

In some embodiments, the preset time is set to a fixed value. As a result, the preset time cannot be changed.

In some embodiments, the preset time value can be adjusted.

Specifically, in some embodiments, the control assembly 500 also comprises a timing signal input device 505 electrically connected with the control circuit 501. The timing signal input device 505 is used for transmitting different timing signals to the control circuit 501, wherein the different timing signals correspond to different preset times. Therefore, it is possible to change the preset time, that is, to change the time interval for the control circuit 501 to start conveying the forward current to the coil 4053 of the solenoid valve and to start conveying the reverse current to the coil 4053 of the solenoid valve by controlling the timing signal input device 505 to transmit different timing signals to the control circuit 501.

In some embodiments, the control assembly 500 also comprises a slider 506 and a timing control button 507, one end of the timing control button 507 is connected with the slider 506, and the other end passes through the opening 105 of the outer case 100, the timing control button 507 is used for actuating the slider 506 to move to different positions, so as to trigger the timing signal input device 505 to generate different timing signals.

In some embodiments, a second elastic part 508 is disposed between the slider 506 and the timing signal input device 505. The second elastic part 508 is deformed when the external force acts, and reset when the external force disappears. The slider 506 is adapted to move to deform the second elastic part 508, so as to trigger the timing signal input device 505 to generate the timing signal.

In some embodiments, the water-saving valve 10 also comprises an inner case 601 and an inner case cover 602, both of which are disposed within the outer case 100. The control assembly 500 (such as the control circuit 501, the start signal input device 502, and the timing signal input device 505) is contained in the inner case 601, both the first elastic part 504 and the second elastic part 508 are disposed on the inner case cover 602, so as to seal the control circuit 501 and the start signal input device 502 as well as the timing signal input device 505 within the inner case 601, thereby preventing water from entering the inner case 601 to damage the control circuit 501 and the start signal input device 502 as well as the timing signal input device 505.

In some embodiments, the inner case 601 also provided a battery box 603 for accommodating a battery pack 604. The battery box 603 comprises a battery box rear cover 605 which is adapted to removably arrange the battery pack 604 within the battery box 603, so as to replace the battery pack 604.

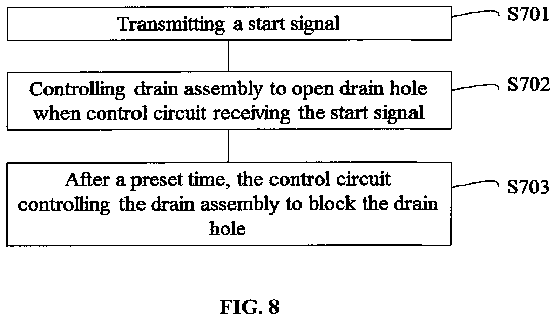

Referring to FIG. 8, the embodiment disclosed herein is also providing a method for controlling the water-saving valve 700. The control method 700 comprises steps S701 to S703.

In step S701, a start signal can be transmitted to a control circuit.

In some embodiments, referring to FIGS. 1 through 7, the start signal can be transmitted to the control circuit 501 by the start signal input device 502. The start signal input device 502 is electrically connected with the control circuit 501. That is to say, transmitting the start signal to the control circuit 501 comprises the start signal input device 502 transmitting the start signal to the control circuit 501.

In some embodiments, the start signal input device 502 transmitting the start signal is implemented by pressing the start button 503. The start button 503 can be moved to trigger the start signal input device 502 to transmit the start signal. That is to say, the start signal input device 502 transmitting the start signal to the control circuit 501 comprises: the start signal input device 502 transmits the start signal to the control circuit 501 when start button 503 triggers the start signal input device 502.

In step S702, controlling the drain assembly to open the drain hole when the control circuit receives the start signal.

In some embodiments, referring to FIGS. 1 through 7, the drain assembly 405 includes a solenoid valve provided with a movable metal core assembly. The movable metal core assembly comprises the movable metal core 4051 and sealing part 4052 connected with one end of the movable metal core 4051. At this time, controlling the drain assembly to open the drain hole comprises the steps of conveying the forward current to the coil 4053 of the solenoid valve, and the coil 4053 generating a forward magnetic field, the movable metal core 4051 moves in a direction away from the drain hole 404 under the action of the forward magnetic field, so that the movable metal core 4051 and the sealing part 4052 connected with the movable metal core 4051 open the drain hole 404.

In some embodiments, when the control circuit 501 controls the solenoid valve to open the drain hole 404, the method also comprises the steps wherein the control circuit 501 stops conveying the forward current to the coil 4053 of the solenoid valve.

In step S703, after a preset time, the control circuit controls the drain assembly to block the drain hole.

In some embodiments, referring to FIGS. 1 through 7, the control circuit 501 controlling the drain assembly 405 to block the drain hole 404 comprises the steps of conveying the reverse current to the coil 4053 of the solenoid valve, and then the coil 4053 of the solenoid valve generates a reverse magnetic field, the movable metal core 4051 moves in a direction close to the drain hole 404 under the action of the reverse magnetic field, so that the movable metal core 4051 and the sealing part 4052 connected with the movable metal core 4051 block the drain hole 404.

In some embodiments, when the control circuit controls the solenoid valve to block the drain hole 404, the method also comprises the steps wherein the control circuit 501 stops conveying the reverse current to the coil 4053 of the solenoid valve.

In some embodiments, before executing the step S703, the control method 700 also comprises the steps wherein the control circuit receiving timing signals, and then determining the preset time in accordance with the timing signal.

In some embodiments, referring to FIGS. 1 through 7, the timing signal is transmitted to the control circuit 501 by the timing signal input device 505. That is, before the control circuit 501 receiving the timing signal, the control method 700 also comprises the timing signal input device 505 transmitting the timing signal to the control circuit 501.

In some embodiments, referring to FIGS. 1 through 7, the timing signal input device 505 transmitting the timing signal is triggered by the slider 506. That is, the timing signal input device 505 transmitting the timing signal comprises: the timing signal input device 505 transmits the timing signal to the control circuit 501 when the timing control button 507 actuates the slider 506 to trigger the timing signal input device 505.

In some embodiments, the control method also comprises the steps of adjusting the timing signal so as to change the preset time.

In some embodiments, adjusting the timing signal comprises the steps wherein the timing control button 507 actuates the slider 506 to different positions, the timing signal input device 505 transmits different timing signals to the control circuit 501, and the different timing signals correspond to different preset times, so as to change the preset time by actuating the slider 506 to different positions.

## Claims

1. A water-saving valve comprising:
a water inlet passageway and a water outlet passageway;
a pressure regulating chamber body and a movable valve plate, wherein the pressure regulating chamber body and the movable valve plate define one pressure regulating chamber, wherein the pressure regulating chamber communicates with the water inlet passageway via a water hole on the movable valve plate, the pressure regulating chamber body is provided with a drain hole, and the drain hole communicates with the pressure regulating chamber, the movable valve plate is configured to move between a first position and a second position by different pressure inside and outside the pressure-regulating chamber acting on the movable valve plate to block or open respectively the water outlet passageway;
a drain assembly configured to block or open the drain hole; and
a control assembly electrically connected with the drain assembly to control the drain assembly to block or open the drain hole.

2. The water-saving valve of claim 1, further comprising: an outer case configured to accommodate the water inlet passageway, the water outlet passageway, the pressure regulating chamber body, the movable valve plate, the drain assembly, and the control assembly, wherein both the water inlet of the water inlet passageway and the water outlet of the water outlet passageway extend outside the outer case.

3. The water-saving valve of claim 2, further comprising: an inner case and an inner case cover, both disposed within the outer case, wherein the drain assembly and the control assembly are disposed within the inner case, and the inner case cover is provided with a first elastic part and a second elastic part,
wherein the first elastic part and the second elastic part are preferably configured to be deformed when an external force acts, and reset when releasing the external force.

4. The water-saving valve of claim 1, wherein the water outlet of the water inlet passageway surrounds the water inlet of the water outlet passageway,
wherein the movable valve plate is preferably configured to move axially between the first position and the second position to block or open the water inlet of the water outlet passageway.

5. The water-saving valve of claim 1, wherein the hole diameter of the drain hole is larger than that of the water hole,
and/or wherein the drain hole communicates with the water outlet passageway,
and wherein the drain hole preferably comprises a first sub drain hole and a second sub drain hole; the pressure regulating chamber comprises a first sub pressure regulating chamber and a second sub pressure regulating chamber; the first sub drain hole communicates with the first sub pressure regulating chamber and the second sub pressure regulating chamber, and the second sub drain hole communicates with the second sub pressure regulating chamber and the water outlet passageway.

6. The water-saving valve of claim 1, wherein the movable valve plate comprises a flexible sealing member and a hard valve plate, and the water hole is disposed on the hard valve plate.

7. The water-saving valve of claim 1, wherein a first reset spring is disposed within the pressure regulating chamber, the first end of the first reset spring abuts the pressure regulating chamber body, and the second end of the first reset spring abuts the movable valve plate; and the extension portion of the second end of the first reset spring is inserted through the water hole,
wherein the first reset spring is preferably disposed within the first sub pressure regulating chamber of the pressure regulating chamber.

8. The water-saving valve of claim 1, wherein the drain assembly comprises a solenoid valve provided with a movable metal core assembly, and the movable metal core assembly comprises a movable metal core and a sealing part connected with one end of the movable metal core,
wherein the solenoid valve is preferably configured to move the movable metal core assembly in a direction away from the drain hole under the action of a forward magnetic field generated by an electromagnetic coil of the solenoid valve when a forward current passes through the electromagnetic coil of the solenoid valve, so as to open the drain hole; and configured to move the movable metal core assembly in a direction close to the drain hole under the action of a reverse magnetic field generated by an electromagnetic coil of the solenoid valve when a reverse current passes through the electromagnetic coil of the solenoid valve, so as to block the drain hole.

9. The water-saving valve of claim 8, wherein the movable iron core assembly is disposed within the second sub pressure regulating chamber of the pressure regulating chamber and configured to block the second sub drain hole of the drain hole, and the second sub drain hole communicates with the second sub pressure regulating chamber and the water outlet passageway,
and/or wherein the control assembly comprises a control circuit configured to convey the reverse current or the forward current to the solenoid valve to control the movable iron core assembly to block or open the drain hole.

10. The water-saving valve of claim 9, wherein the control circuit is configured to stop conveying the forward current to the coil of the solenoid valve after the movable metal core assembly moves from a position of blocking the drain hole to a position of opening the drain hole; and configured to stop conveying the reverse current to the coil of the solenoid valve after the movable metal core assembly moves from a position of opening the drain hole to a position of blocking the drain hole.

11. The water-saving valve of claim 10, wherein the drain assembly further comprises a magnet close to one end of the movable metal core assembly away from the drain hole, and the magnet is configured to retain the movable metal core assembly at the position of opening the drain hole after the control circuit stops conveying the forward current to the coil of the solenoid valve,
and/or wherein the drain assembly further comprises a second reset spring, disposed within the second sub pressure regulating chamber of the pressure regulating chamber and connected to the movable metal core assembly, and the second reset spring being configured to retain the movable metal core assembly at the position of blocking the drain hole after the control circuit stops conveying the reverse current to the coil of the solenoid valve.

12. The water-saving valve of claim 9, wherein the control assembly further comprises a start signal input device electrically connected with the control circuit and configured to transmit a start signal to the control circuit; and the control circuit is configured to convey the forward current to the coil of the solenoid valve when receiving the start signal from the start signal input device.

13. The water-saving valve of claim 12, wherein the control assembly further comprises a start button configured to move under the action of the external force to trigger the start signal input device to generate the start signal,
wherein a first elastic part is preferably disposed between the start button and the start signal input device, wherein the start button is configured to move to deform the first elastic part, so as to trigger the start signal input device to generate the start signal,
and/or wherein the start button is disposed in the opening of the upper surface of the outer case.

14. The water-saving valve of claim 9, wherein the control circuit is configured to convey the reverse current to the coil of the solenoid valve to cause the movable metal core assembly to block the drain hole after a preset time since starting to convey the forward current to the coil of the solenoid valve.

15. The water-saving valve of claim 14, wherein the control assembly further comprises a timing signal input device electrically connected with the control circuit and configured to transmit different timing signals to the control circuit, and different timing signals corresponding to different preset times,
wherein preferably the control assembly further comprises a slider and a timing control button, and one end of the timing control button is connected with the slider, the other end passes through the outer case, and the timing control button is used to actuate the slider to move to different positions, so that the timing signal input device generates different timing signals,
wherein preferably a second elastic part is disposed between the slider and the timing signal input device, wherein the slider is configured to move to deform the second elastic part, so as to trigger the timing signal input device to generate the timing signal.
